# EUROPEAN PATENT SPECIFICATION

(11) **EP 1 154 685 B1**
(45) Date of publication and mention of the grant of the patent: **09.06.2004**
(21) Application number: 00908854.3
(22) Date of filing: 23.02.2000
(51) Int. Cl.: A01M 7/00, A01B 79/00

(54) **MOVEABLE SPRAYING BOOM**
BEWEGLICHES SPRITZGESTÄNGE
RAMPE MOBILE DE PULVERISATION DE CULTURES

(30) Priority: 23.02.1999 BE 9900116
(43) Date of publication of application: 21.11.2001
(73) Proprietor: K.U.Leuven Research & Development, 3000 Leuven (BE)
(72) Inventor: DE BAERDEMAEKER, Josse, B-1785 Merchetem (BE); ANTHONIS, Jan, B-3050 Oud-Heverlee (BE); RAMON, Herman, B-9000 Gent (BE)
(74) Representative: Bird, Ariane
(86) International application number: PCT/BE2000/000018
(87) International publication number: WO 2000/049866

(56) References cited:
- WO-A-91/03148
- DE-U- 29 908 919
- US-A- 5 246 164
- US-A- 5 809 440

## Description

### Field of the invention

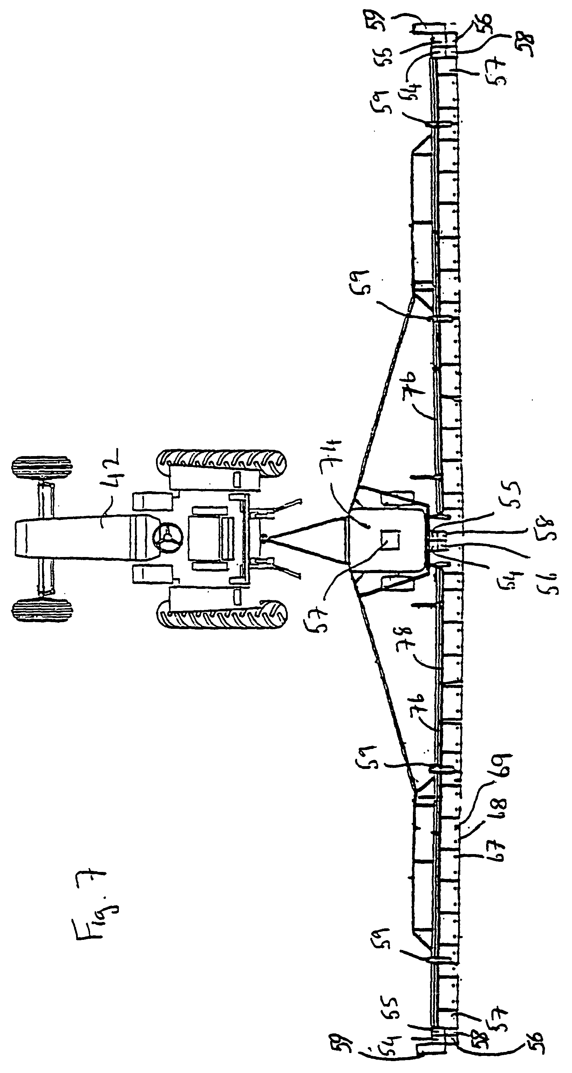

The present invention relates to spraying machines that are used for the treatment of fields or crops with flowable materials, such as fluids, mud-like material, solid particles, granules, pesticides or liquid fertilisers. The machine comprises a mechanical structure which is usually foldable, called the boom, on which spray nozzles are mounted (FIG 7). The spray nozzles are fed via pipelines, secured to the boom, by means of a pump that draws spraying liquid from one or more tanks that are situated on the machine. In the case of several tanks being used, more than one pump can be provided. A control unit is used to adapt the dosage in accordance with the movement of a spray nozzle or a spray section.

### Description of the present state of the art

Crop spraying boom movements are one of the main causes of an inhomogeneous distribution of the spraying liquid. In the case of a crop spraying boom moving only horizontally, even though the tractor travels over the field with a uniform speed, the spray nozzles will move across the crop with a variable speed due to the presence of the spray boom movements or vibrations. With no wind, the time during which a spray nozzle resides above a particular part of a plant or the ground, or the time during which a particular part of a plant or the ground receives spraying liquid, will vary over the field due to this variable speed. At a constant flow rate of the liquid, this results in an inhomogeneous distribution of the liquid. In the case of only vertical movements, the spray cones will at some places become bigger and at other places smaller, due to the up and down movement of the spraying boom. At a constant flow rate through the spray nozzles, the spray nozzles that reside at a higher position will cover a bigger area than the spray nozzles that reside at a lower position. Accordingly, the ground or plants that are being sprayed by a higher spray nozzle receive less liquid than the ground or plants being sprayed by a lower spray nozzle.

Because the spraying boom movements are mainly induced by unevenness of the ground, which are transmitted to the boom via the tow bar, existing solutions try to isolate the boom from the tow bar in a horizontal and vertical direction by means of a suspension, in order to obtain a spray pattern which is as homogeneous as possible.

On conventional spraying machines usually only passive suspensions are provided, based on the principle of a pendulum or an unwinding system, which should reduce the rolling of the boom. Investigation has shown that if the spray nozzle height varies less than half of the desired spray nozzle height, the variations in the spray pattern as a consequence of the rolling of the boom, are between a factor of 0.85 and 1.4 of the desired dose.

In the horizontal direction, the suspension is usually limited to rubber blocks or a few struts only. Although little is provided for unwanted spray boom movements in the horizontal plane, these movements are far more critical than the vertical ones. Investigation has also shown that movements of the spray nozzles with an amplitude of 30 cm can already result in an overdosing of a factor 3. A more advanced suspension than the conventional ones, will certainly reduce the spray boom movements in the horizontal plane; but to reduce the movements to 30 cm with the help of conventional methods and given the present state of the technology, bearing in mind spraying boom widths of 40 m, is not practical. Moreover, a suspension is only capable of reducing spraying boom movements caused by vibrations transmitted by the tow bar. Other disturbances that induce boom movements, like for instance striking an obstacle, cannot be reduced by means of a suspension and also result in an irregular spray pattern. Even if a suspension is able to perfectly isolate the boom from the tow bar, this is still no guarantee for a vibration-free boom. An irregular dosage induces an irregular spray pattern.

Variable dosage results in overdosing, i. e. spraying too much to guarantee a minimal cover. As a consequence, a more homogeneous spraying technique allows a reduction of the degree of overdosing, which results in less pollution of the groundwater. Further reductions can in some cases be achieved through spot spraying of weeds or plants.

From WO 91/03148 a method is known of dosing for instance, manure, fertilisers, chemicals and/or seed grain, where sections of the field are dosed individually. The field is divided into micro-sections. For each micro-section, soil data is gathered, such as direction and degree of inclination, content of micro-nutrients and fertilisers, physical composition, acidity, temperature, yield, and this soil data and is stored in a control unit. This is done during a first, measuring traverse. During a second traverse, which is a spraying traverse during which doses of product arc applied onto the field, the collected soil data is used in a supplv unit for automatic variation of the dosage from a dosage unit, so that the dosage is correct for each micro section. It is a disadvantage of the method described in WO 91/03148, that the deviations from the pre-calculated dosages will be applied, due to vibrations or random reciprocating movements of the spraying boom during movement thereof by a vehicle.

The objective of the present invention comprises the provision of a spray system and a spray method that allow a more precise dosage of the sprayed material.

### Summary

The present invention achieves this objective by a moveable distribution apparatus, a moveable agricultural implement, as well as through a method for the distribution of liquid material across a substrate as defined in the respective claims.
One of the embodiments of the present invention comprises not only influencing the boom movements but also adapting the flow rate of each spray nozzle or spray section in accordance with its speed or its height above the crop, such that a homogeneous distribution of the spraying liquid is obtained.
A spray section comprises several spray nozzles. To save costs, a control unit can be provided, which calculates and controls the desired dose on the basis of the movement of a number of spray nozzles instead of just one nozzle. Of course, a less homogeneous distribution will be obtained in case of a control per spray nozzle.

Three different control methods are presented. What characterizes these control methods is the fact that they occur in two steps. First, a pressure is adjusted for a number of the spray nozzles. On the basis of this adjusted pressure, a second adjustment will set the appropriate flow rate per spray nozzle or per spray section. This method of working can avoid an expensive pump, whose flow rate can be adjusted.
Three sorts of control algorithms are also presented, which are classified in accordance with the minimum of information they require in order to perform an adjustment action.

### Detailed description

The present invention will be described by means of specific embodiments and drawings without being restricted thereto, but only by the claims. In particular, the present invention will be described with respect to the uniform sprinkling, spraying or atomizing of a liquid.
The present invention is not restricted thereto and can comprise any form of distribution of flowable material, like solid particles, granules, grains, a fluid or a slurry material. The present invention comprises in particular spot spraying of weeds, whereby only weeds are sprayed with a herbicide, or spot spraying of crops, whereby only crops and specific plants are sprayed with an insecticide. Furthermore, the present invention can be used with spraying machines other than the ones shown in Figure 7. For instance, the present invention can be applied to irrigation systems such as central pivot irrigation systems (described in US 5,246,164) as well as for the general spraying of liquids and solid particles out of moving spraying arms or booms.

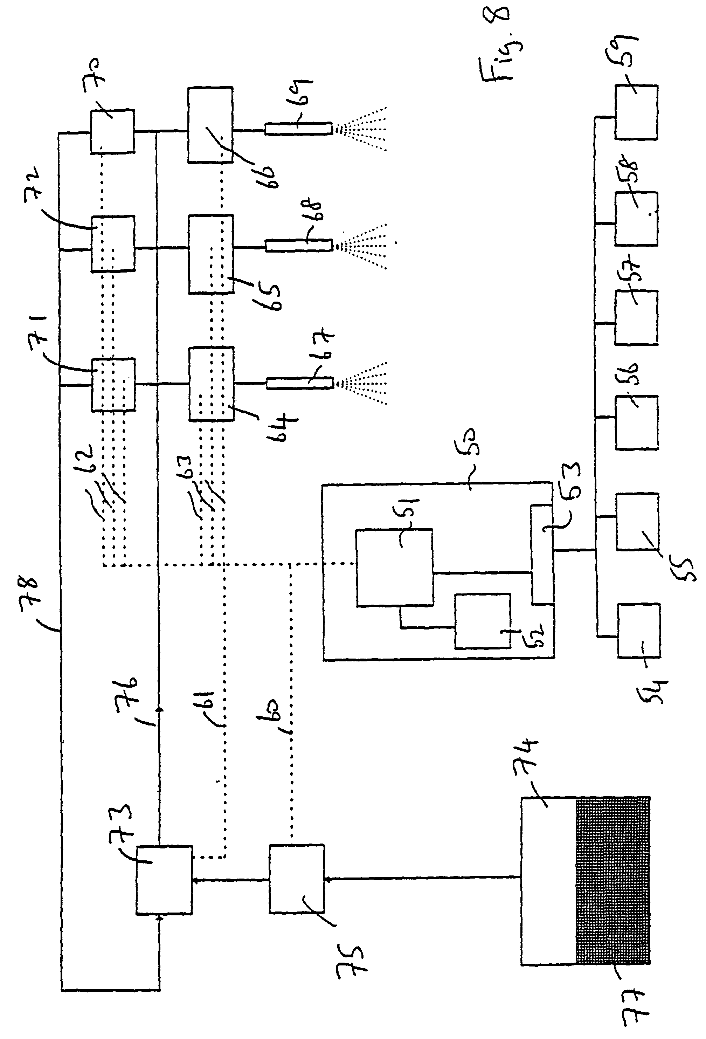

Figures 7 and 8 show a flow control system for the distribution system in accordance with an embodiment of the present invention. Flowable material 77 is transported from a container or reservoir 74 to a pump device 75, which pumps the material 77 along a main supply line 76. The pressure and/or the transport of the material 77 can be controlled by means of a control valve 73. Each dispensing element 67-69, such as, for instance, a spray nozzle, is connected with the supply line 76 via a control valve apparatus 64-66, respectively. The control valve apparatus 64-66 controls the flow through each dispensing element 67-69. In some of the embodiments, the control valve apparatus 64-66 can be a simple on/off valve or can include flow rate and/or pressure control for each dispensing element 67-69. Each dispensing element 67-69 can optionally be connected with a return pipe 78 via a return control valve unit 70-72, respectively. Material 77 can be circulated continuously via the supply line 76 and the return pipe 78 and via the return control valves 70-72. The material 77 for distribution via the dispensing unit 67-69 can be diverted by partially closing the respective return valves 70-72 and by opening the respective valves 64-66. In this way, variations in flow rate and pressure can be reduced to a minimum.

The distribution system can be controlled or regulated by means of a control unit 50, which can comprise an electronic processor 51 and appropriate volatile and non-volatile memories 52. A plurality of sensor units 54-59 transmit appropriate signals to the processor 51 via an interface 53. One of, the aspects of the present invention comprises the control of the dispensing elements 67-69 in such a way that the distribution pattern of the material 77 on the ground is substantially independent of unforeseen reciprocating movements of the crop spraying boom. As a consequence, in accordance with one of the aspects of the invention, the control unit 50 controls the flow of materials out of the dispensing elements 67-69 to compensate for unforeseen movements of the spraying boom. These movements can consist of vertical as well as horizontal oscillations that are caused by the rolling and the yawing, respectively of the drive unit, as well as by rotation of the spraying boom caused by the pitching of the drive unit. The most critical movement is usually the horizontal reciprocating motion caused by the yawing of the drive unit. For agricultural crop spraying booms up to 36 m, typical amplitudes and frequences are respectivley 30 cm or more and 0,3 Hz or more, typically 0,3 to 5 Hz.
Sensors 54-59 can comprise speed sensors 54 which record the speed of the boom with respect to the ground, and which can be contactless speed sensors, as described in US 4,728,954, US 4,980,633 or US 5,148,409 which use sonar or radar. These sensors 54 can be mounted on the extremity of the spraying boom and on the central suspension point in order to measure the speed of the extremities as well as that of the centre of the spraying boom. On the basis of the output signals of the sensors 54, the speed of each dispensing element 67-69 with respect to the ground is calculated by interpolation. Optionally, sensors 55 can comprise sensors that measure the height above the ground of the spraying boom, in order to deduce the respective height of each dispensing element 67-69. The height of each dispensing element 67-69 above the ground can influence the distribution area on the ground. Sensors 56 can comprise vertical accelerometers to measure the vertical acceleration of the spraying boom. The output of the sensors 56 in combination with the output of the sensors 55 can be used to calculate the expected height of each dispensing element at the moment a set dose of material 77 is to be dispensed via one of the dispensing elements 67-69.

The sensors 57 can comprise sensors for the absolute position with respect to the ground, for instance global positioning receivers (GPS or GLONASS), or sensors for the relative position, which sensors measure the position relative to fixed reference beacons as described in DE-A-4141076.
The sensors 58 can comprise accelerometers for measuring the change in the horizontal speed of the spraying boom. These sensors 58 can be mounted on the extremities of the spraying boom and on the central suspension point. The output of the sensors 54 in combination with the output of the sensors 58 can be used to predict a precise value for the horizontal speed of each dispensing element 67-69 at a point of time in the future, when the dispensing element 67-69 dispenses material 77, whereby possible delays in the distribution system are taken into account.
Sensor unit 59 comprises sensors to identify specific objects, such as plants and weeds. Control unit 50 can control the flow of material 77 through each dispensing element 67-69 independently, in accordance with the output signal of the sensor unit 59 in order to distribute material 77 either on the identified object or specifically not on the object. In order to achieve this, the control unit 50 can take into account the output signals from one or more sensoring units 54-58, in order to accurately adjust the flow rate and the timing of the dispensing of material 77 through each dispensing element.
Processor 51 can, if so desired, also create a spray map that portrays the amount of material 77 distributed or sprayed across the ground. The field to be sprayed can be simulated in the memory 52 by means of a 2D-matrix of pixels, whereby each pixel represents a unit of surface area, e.g. of 10 by 10 cm. Based on the data received from the sensors 54-59, processor 51 calculates the amount of material 77 that has been sprayed on each point in the field, and processor 51 registers these values in the matrix.

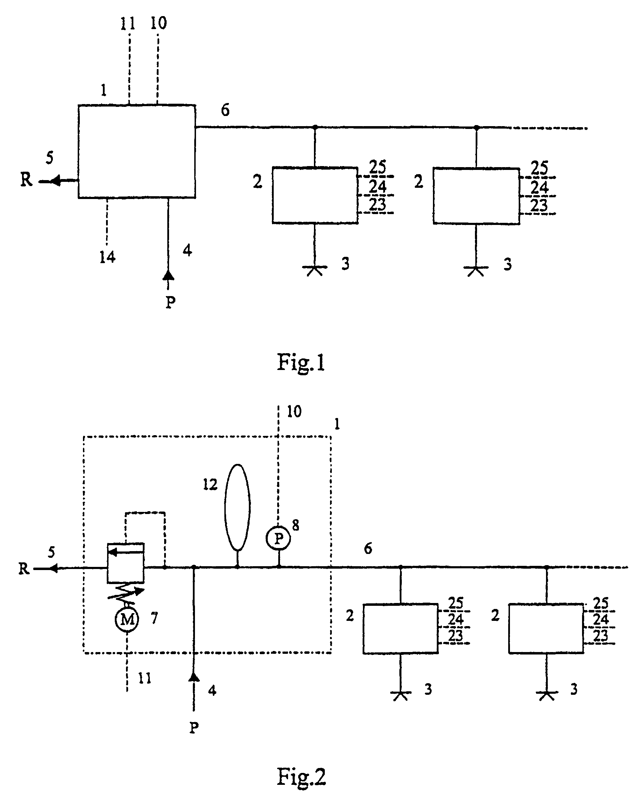

In the following, further embodiments of the present invention are discussed. The principle scheme for control of the flow rate of the spray nozzle or spray section 3, based on the movement of this spray nozzle or spray section 3, is shown in Figure 1. The control occurs in two steps. The first step comprises a pressure control 1 and the second step comprises the final flow rate control 2, based on the movement of the spray nozzle or spray section 3. In Figure 1, only two flow rate control means 2 and spray nozzles or spray sections 3 are shown. Without restriction, several flow rate control means 2 and spray nozzles or spray sections 3 can be provided. Figure 1 shows the hydraulic part of the control downstream of the pump circuit and upstream of the return. The supply line 4 is connected with the pump marked P. Anything upstream of this P, concerns the pump circuit and is not discussed here. Without restriction, line 4 can, for example, be connected with several pumps and the type of pump is of no importance. Also, anything that concerns filters is of no importance here.
Everything downstram of return line 5, is marked R and is also not discussed. This return line is directly or indirectly connected with the liquid tank or the liquid tanks from which the spraying liquid is pumped to feed the spray nozzles or the spray sections 3.

The pressure control means 1, is connected with the supply line 4 coming from the pump circuit. The pressure in pressure line 6 is controlled by sending the surplus flow to the return line 5. Hereby, an expensive pump whose flow rate can be set, can be avoided. The flow rate through the return line 5, can still be used to stir the content of the tank or the tanks.
Without restriction, additional stop-valves can be mounted in pressure line 6 to shut off a number of the spray sections or spray nozzles, as well as filters or other components that do not directly contribute to the flow rate control based on the movement of the spray nozzles or spray sections 3.

Three different pressure controls are described, which can be classified in two groups, namely that of constant pressure control and that of load sensing control.

Within the first group, that of the constant pressure control, the pressure in the supply line 4 and in the pressure line 6 is kept constant during the spraying. Variations in pressure in the pressure line 6, as a consequence of a change in the flow rate towards one of the spray nozzles or spray sections 3, are compensated for by reducing or increasing the flow rate to the return line 5. Because of the fact that the pressure in the pressure line 6 is kept constant, the different users, in the form of the flow rate control means 2 and the spray nozzles or the spray sections 3, do not influence each other. Hereby, the flow rate control means 2 becomes simple because the other users do no need to be taken into account. One flow rate control means 2 can be designed, without having to take into account the number of users on the pressure line 6.

A first variant of the constant pressure control means 1 is shown in Figure 2 and controls the pressure by means of a pressure control valve 7. Pressure control valve 7 is equipped with an actuator so that it can be operated via an electric or electronic control unit and that a desired pressure can be set from a distance. The pressure present in the pressure line 6 is measured by a pressure gauge 8 and is sent via line 10 to the electric or electronic control unit 9. In this way, the pressure control valve 7 can be set correctly by the electric or electronic control unit 9 via line 11. An optional accumulator 12 can possibly be applied for the smoothing of residual pressure variations, which are not removed by the constant pressure control.

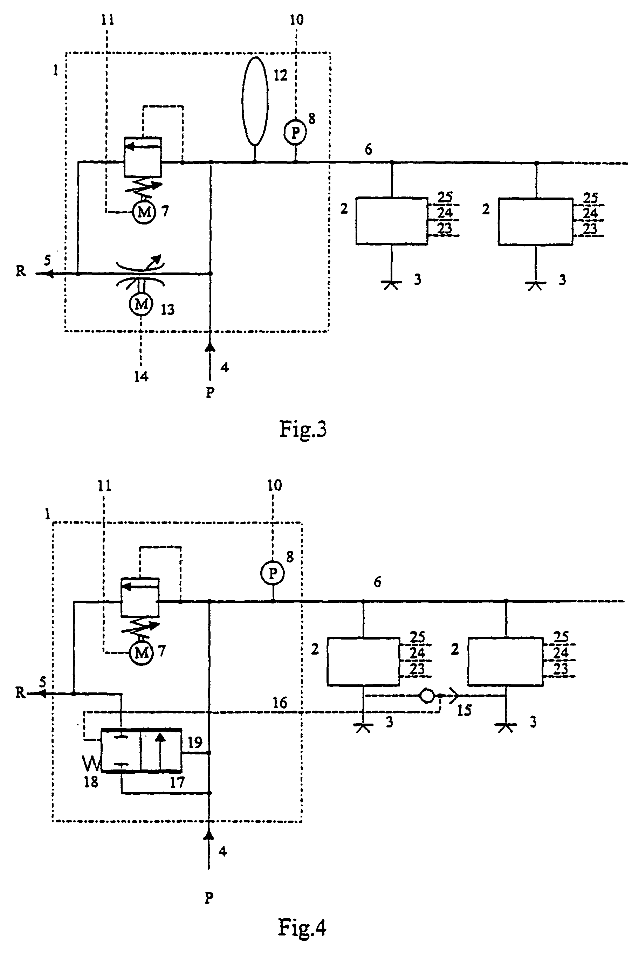

With the second variant of the constant pressure control means 1, shown in Figure 3, the pressure in the supply line 4 and in the pressure line 6 is controlled through an actuator operated throttle valve 1 that is in connection with the supply line 9 and the return line 11. Pressure control valve 8 is meant rather as a safety valve and therefore is not necessarily actuator controlled but, possibly, can be operated by the control unit 9 via line 11. The throttle valve 13 is controlled, based on the measured values of pressure measuring unit 8, by an electric or electronic control unit 9. Also, just as for the first variant of the constant pressure control, an optional accumulator 12 can be provided for smoothing residual pressure variations, which are not removed by the constant pressure control.

Concerning the pressure control based on load sensing, shown in Figure 4, the pressure in the supply line 4 and the presure line 5 is kept somewhat higher than the pressure between spray nozzle or spray section 3 and the flow rate control means 2 of the biggest consumer. The biggest consumer corresponds to that particular spray nozzle or spray section 3 where the pressure just behind the flow rate control means 2 is the highest. Thereby, the change over valve 15 switches in such a way that the biggest consumer is connected with line 16. Switching valve 17 is on one side served by line 16 and a spring 18, and at the other side by line 19, in connection with supply line 4. If, for example, the demand of the biggest consumer rises, the pressure in line 16 increases. The equilibrium of forces on switching valve 17, comprising the pressures in the lines 16 and 19 and the resilient force 18, is then disturbed, as a result of which the connection with the return pipeline 5 is more closed, in such a way that the supply line 4 and the pressure line 6 receive a higher flow rate. If other consumers temporarily require a higher flow rate, the pressure in the supply line 4 and in the pressure line 6 will temporarily decrease, whereby switching valve 17 again will shut off more the connection to return pipe 5. The same can also be said about flow rate reductions. In case of more than two consumers, several change over valves 15 need to be provided in such a way that it is always the biggest consumer which is connected with line 16. To protect the hydraulic circuit, an extra safety valve 7 is mounted, which, possibly, can be set manually or via an actuator via line 11 through the control unit 9. At too high pressures, supply line 4 and pressure line 6 will be connected with the return line 5.

In comparison with the constant pressure system, for load sensing less energy is required from the pump on average. In the constant pressure system, the pressure in supply line 4 and pressure line 6 continuously have to be kept so high that still under the worst possible circumstances, the appropriate flow rate can be delivered. Because this quantity is not known in advance as the movements of the spray boom are not known, the pressure in the supply line 4 and the pressure line 6 have to be set sufficiently high. Possibly, the set pressure can still be changed while driving, but it always remains an overestimation. With the load sensing system, the pressure in the supply line 4 and in the pressure line 6 is always adapted to the biggest consumer. Bearing in mind the fact that, after the spraying operation, a homogeneous spray pattern is obtained, the average flow rate, whether it concerns a constant pressure system or a load sensing system, must be the same in both cases. Given the fact that with the load sensing system the pressure is never higher than with the constant pressure system, the energy consumption of the load sensing system is lower. A disadvantage compared to the constant pressure system is that the consumers now do influence each other, as a consequence of which the flow rate control means 2 will be more difficult to implement.

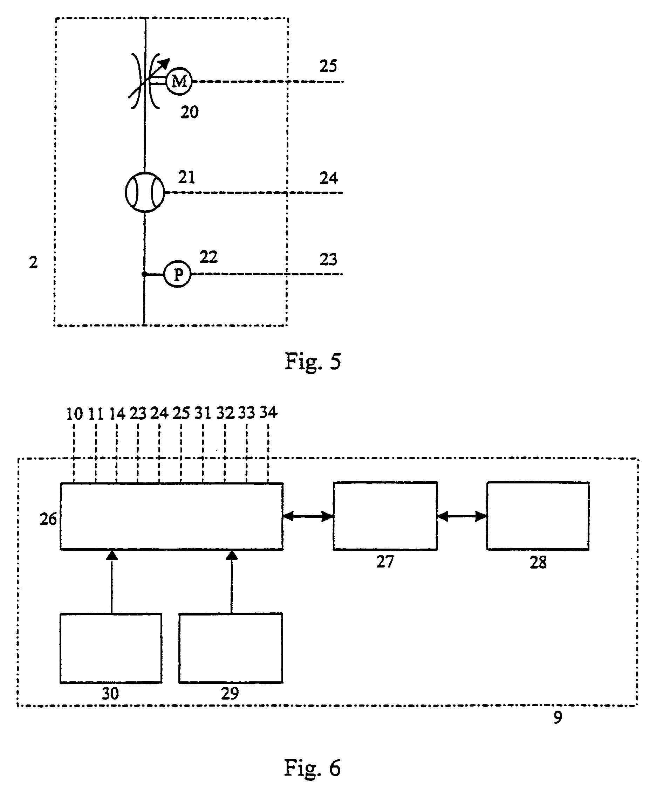

Flow rate control means 2, shown in Figure 5, is made up of an actuator controlled throttle valve 20, followed by a flow meter 21 and a pressure gauge 22. Possibly, instead of a flow meter 21, only the pressure can be measured by means of a pressure gauge 22 or vice versa. The pressure and/or the flow rate signal reach the control unit 9 via the lines 23, 24 respectively. The flow rate that goes to the spray nozzles 3, is controlled by means of an actuator controlled throttle valve 20, which receives its control signals from the electric or electronic control unit 9 via line 25.

The electric or electronic control unit 9 is responsible for the calculation of control actions and the sending of control signals to the two steps of the control process, that is the pressure control means 1 and the flow rate control means 2, and is shown in Figure 6. The electric or electronic control unit 9 comprises a unit responsible for the exchange of input and output signals 26, the microprocessor 27 and the memory 28. Control parameters and other data such as the driving speed, pressures in the pressure line 6, flow rates, ... can be read from a screen 29. Some data such as the flow rate, maximal pressure in the circuit etc. can be introduced via the keyboard 30. As said before, the electric or electronic control unit 9 sends and receives control signals or measuring signals to and from the hydraulics. Via line 14 the pressure control valve 7 can be set, and via line 4 the actuator controlled throttle valve 13, on the basis of the pressure signal from line 10, and without any restrictions possible other parameters can be set.

Signal and control lines 23, 24, 25, 31, 32 and 33 can, without restriction, be implemented in a plurality. Signal line 33 represents all additional but not yet mentioned lines with extra information from measuring sensors. Line 33 can, for example, be used for the measurement of the tank contents. Also, without restriction, superfluous signal or control lines can be omitted.

The types of algorithms for the flow rate control means 2 that can be programmed on the control unit 9, are classified on the basis of the minimum of information they use for the control. Based on the measuring signals which the control unit 9 receives, the throttle valves 20 of the flow rate control means 2 are controlled, also through control unit 9 via line 25. Characteristic for these algorithms is that they all three make use of at least one speed measurement and a pressure measurement, or at least one speed measurement and a flow rate measurement, or at least one speed measurement, a pressure measurement and a flow rate measurement. Each of the aforementioned combinations of measuring signals are called standard measuring data. The speed measurement represents the speed of the spraying machine itself and can, for example, be measured with an inductive wheel sensor, radar or in any other way. This information on the speed reaches the control unit via line 34, possibly implemented in a plurality in case of several speed measurements. The pressure measurement relates to the pressures measured by the pressure gauge 22, coming from the flow rate control means 2 and tranmitted to the control unit 9 via lines 23. Via lines 24, the measured data from the flow meters 21 are transmitted to the control unit 9. This flow meter 21 can be found in each flow rate control means 2.
The first type of algorithm is called the vertical control, which in addition to the standard measuring data of each algorithm at least makes use of the height above the crop or the ground of the spray nozzle or spray section 3. This information enters the control unit 9 via lines 26. Each line 26 is at the other extremity directly or indirectly connected with a proximity gauge. This proximity gauge can, for example, be a mechanical sensor or an ultrasonic sensor.

The second type of algorithm is called the horizontal control, which in addition to the standard measuring data of each algorithm, at least uses the acceleration of the spray nozzle or spray section 3 above the crop or the ground. These acceleration signals are transmitted to the control unit 9 via lines 31.
The third type of algorithm is called the vertical and horizontal control, which in addition to the standard measuring data of each algorithm at least makes use of the height and of the acceleration of the spray nozzle or spray section 3 above the crop or the ground. The information necessary for this enters via lines 31 and 32 as described hereinbefore.

## Claims

1. Moveable implement for the distribution of flowable material onto a substrate, comprising:
an elongate distributing element having one or more dispensing elements for the flowable material along its entire length; whereby the distributing element is fixable to and supportable by a driving element for moving the implement over the substrate, and whereby the distributing element cooperates mechanically with a support device so that the distributing element and its dispensing elements are subject to random reciprocating movements while the driving element moves the implement over the substrate;
**characterized by**:
a first sensor unit for deriving a relative speed and/or a change in relative speed of each dispensing element with respect to the substrate, said derived relative speed and/or change in relative speed comprising a speed component determined by random reciprocating movements; and
a control unit for controlling the flow of flowable material, to be dispensed by each dispensing element, in accordance with the derived relative speed and/or change in relative speed of the respective dispensing element.

2. Moveable implement according to claim 1, wherein the first sensor unit comprises a second sensor unit for deriving the relative speed of the driving element with respect to the substrate, and a third sensor unit for deriving values, which represent changes in speed of each dispensing element.

3. Moveable implement according to any of the previous claims, further comprising a third sensor unit for deriving the relative speed of each dispensing element with respect to the substrate, whereby the control unit controls the flow of flowable material, to be dispensed through each dispensing element, in accordance with the derived relative speed of the respective dispensing element.

4. Moveable implement according to any of the previous claims, wherein the implement is an agricultural implement.

5. Moveable implement according to any of the previous claims, wherein the substrate is the ground.

6. Moveable distributing apparatus for distributing flowable material onto a substrate, comprising:
a moveable implement according to any of the previous claims, and
a driving element for moving the movable implement with respect to the substrate.

7. Moveable distribution apparatus or moveable implement according to one of the previous claims, whereby the flowable material is a liquid, a mud-like material, or consists of solid particles or granules.

8. Method for the distribution of flowable material onto a substrate; whereby an elongate distributing element having one or more dispensing elements for the flowable material along its entire length, is used, whereby the distributing element and its dispensing elements are subject to random reciprocating movements; the method comprising
deriving a description of the movement of each dispensing element, said movement including a component determined by random reciprocating movements;
control of the flow of flowable material from each dispensing element, in accordance with the respective description.

9. Method according to claim 8, whereby the dispensing element is a spray nozzle or a spray section and whereby a distribution of spraying liquid as homogeneous as possible is achieved by controlling the flow rate through the spray nozzle or spray section, depending on the movement of this spray nozzle or spray section.

10. Method according to any of claims 8 or 9, whereby the control occurs in two steps, whereby the first step comprises a pressure control (1) and the second step comprises the actual flow rate control (2).

11. Method according to claim 10, whereby the pressure control is implemented on the basis of a pressure control valve (7).

12. Method according to claim 11, whereby the pressure control valve (7) can be set by a control unit (9).

13. Method according to claim 12, whereby the control unit (9) determines the setting of the pressure control valve (7) on the basis of data in the form of inputted information coming of the user or measurement signals.

14. Method according to claim 10, whereby the pressure control (1) is implemented on the basis of a throttle valve (13).

15. Method according to claim 14, whereby the throttle valve (13) can be operated by a control unit (9).

16. Method according to claim 15, whereby the control unit (9) determines the setting of the throttle valve (13) on the basis of data under the form of inputted information of the user or measurement signals.

17. Method according to any of claims 13 or 16, whereby one of the measurement signals comprises a pressure measurement (8).

18. Method according to claim 10, whereby the pressure control (1) adapts itself to the pressure required by the largest user on the hydraulic circuit.

19. Method according to claim 18, whereby the pressure control occurs on the basis of a changeover valve (15) and a switching valve (17).

20. Method according to any of claims 14 to 19, whereby a protection against excess pressure is provided in the form of a pressure control valve (7).

21. Method according to claim 20, whereby the pressure control valve (7) can be set by a control unit (9).

22. Method according to claim 21, whereby the control unit (9) determines the setting of the pressure control valve (7) on the basis of data in the form of inputted information of the user or measurement signals.

23. Method according to claim 22, whereby one of the measurement signals comprises a pressure measurement (8).

24. Method according to any of claims 10 to 23, whereby the algorithm of the flow rate control uses at least one speed measurement and one pressure measurement.

25. Method according to any of claims 10 to 24, whereby the algorithm of the flow rate control uses at least one speed measurement and one flow rate measurement.

26. Method according to any of claims 24 or 25, whereby at least one height measurement is used.

27. Method according to claim 26, whereby this height measurement occurs at the height of a spray nozzle or a spray section (3).

28. Method according to any of claims 24 to 27, whereby at least one acceleration measurement is used.

29. Method according to claim 28, whereby the acceleration measurement occurs at the height of a spray nozzle or a spray section (3).

## Patentansprüche

1. Bewegliches Gerät für die Verteilung von fließfähigem Material auf ein Substrat umfassend:
ein gestrecktes Verteilungselement, welches ein oder mehr Abgabeelemente für das fließfähige Material über seine gesamte Länge beinhaltet; wobei das Verteilungselement befestigbar an und haltbar durch ein Betätigungselement ist, zur Bewegung des Gerätes über das Substrat, und wobei das Verteilungselement mechanisch mit einer Stützvorrichtung zusammenwirkt, so daß das Verteilungselement und seine Abgabeelemente zufälligen Hin- und Herbewegungen ausgesetzt sind, während das Betätigungselement das Gerät über das Substrat bewegt; **gekennzeichnet durch**
eine erste Sensoreinheit zur Herleitung einer Relativgeschwindigkeit und/oder einer Änderung in der Relativgeschwindigkeit eines jeden Abgabeelements in Bezug zu dem Substrat, wobei die hergeleitete Relativgeschwindigkeit und/oder Änderung in der Relativgeschwindigkeit eine Geschwindigkeitskomponente, welche **durch** zufällige Hinund Herbewegungen bestimmt wird, aufweist; und
eine Steuerungseinheit zur Steuerung des Flusses des fließfähigen Materials, welches **durch** jedes Abgabeelement abgegeben werden soll, in Übereinstimmung mit der hergeleiteten Relativgeschwindigkeit und/oder Änderung in der Relativgeschwindigkeit des jeweiligen Abgabeelements.

2. Bewegliches Gerät nach Anspruch 1, wobei die erste Sensoreinheit einen zweiten Sensor zur Herleitung der Relativgeschwindigkeit des Betätigungselementes in Bezug zu dem Substrat aufweist und eine dritte Sensoreinheit zur Herleitung von Werten, welche Änderungen in der Geschwindigkeit eines jeden Abgabeelementes repräsentieren.

3. Bewegliches Gerät nach einem der vorhergehenden Ansprüche, weiterhin beinhaltend eine dritte Sensoreinheit zur Herleitung der Relativgeschwindigkeit eines jeden Abgabeelements in Bezug zu dem Substrat, wobei die Steuerungseinheit den Fluß des fließfähigen Materials steuert, welches durch jedes Abgabeelement abgegeben werden soll, in Übereinstimmung mit der hergeleiteten Relativgeschwindigkeit des jeweiligen Abgabeelements.

4. Bewegliches Gerät nach einem der vorhergehenden Ansprüche, wobei das Gerät ein Landwirtschaftsgerät ist.

5. Bewegliches Gerät nach einem der vorhergehenden Ansprüche, wobei das Substrat der Boden ist.

6. Bewegliche Verteilungsvorrichtung zur Verteilung von fließfähigem Material auf ein Substrat beinhaltend:
ein bewegliches Gerät nach einem der vorhergehenden Ansprüche und
ein Betätigungselement zur Bewegung des beweglichen Gerätes in Bezug zu dem Substrat.

7. Bewegliche Verteilungsvorrichtung oder bewegliches Gerät gemäß einem der vorhergehenden Ansprüche, wobei das fließfähige Material eine Flüssigkeit ist, ein schlammähnliches Material ist oder aus festen Partikeln oder Körnchen besteht.

8. Verfahren zur Verteilung von fließfähigem Material auf ein Substrat, wobei ein gestrecktes Verteilungselement, welches ein oder mehrere Abgabeelemente für das fließfähige Material auf seiner gesamten Länge aufweist, benutzt wird, wobei das Verteilungselement und seine Abgabeelemente zufälligen Hin- und Herbewegungen ausgesetzt sind; wobei das Verfahren aufweist:
Herleiten einer Beschreibung der Bewegung eines jeden Abgabeelements, wobei die besagte Bewegung eine Komponente aufweist, welche durch zufällige Hin- und Herbewegungen bestimmt wird;
Steuerung des Flusses des fließfähigen Materials aus jedem Abgabeelement in Übereinstimmung mit der jeweiligen Beschreibung.

9. Verfahren nach Anspruch 8, wobei das Abgabeelement eine Sprühdüse oder eine Sprühsektion ist und wobei eine Verteilung von Sprühflüssigkeit so homogen wie möglich erreicht wird durch Steuerung der Durchflußmenge durch die Sprühdüse oder Sprühsektion, abhängig von der Bewegung dieser Sprühdüse oder Sprühsektion.

10. Verfahren nach einem der Ansprüche 8 oder 9, wobei die Steuerung in zwei Schritten stattfindet, wobei der erste Schritt eine Drucksteuerung (i) und der zweite Schritt die Steuerung der gegenwärtigen Durchflußmenge (2) aufweist.

11. Verfahren nach Anspruch 10, wobei die Drucksteuerung auf der Basis eines Drucksteuerungsventils (7) implementiert ist.

12. Verfahren nach Anspruch 11, wobei das Drucksteuerungsventil (7) durch eine Steuerungseinheit (9) eingestellt werden kann.

13. Verfahren nach Anspruch 12, wobei die Steuerungseinheit (9) die Einstellung des Drucksteuerungsventils (7) auf der Basis von Daten in der Form von eingegebenen Informationen kommend vom Benutzer oder von Meßsignalen ermittelt.

14. Verfahren nach Anspruch 10, wobei die Drucksteuerung (1) auf Basis eines Drosselventils (13) implementiert ist.

15. Verfahren nach Anspruch 14, wobei das Drosselventil (13) durch eine Steuerungseinheit (9) betrieben werden kann.

16. Verfahren nach Anspruch 15, wobei die Steuerungseinheit (9) die Stellung des Drosselventils (13) auf der Basis von Daten in der Form von eingegebenen Informationen des Benutzers oder von Meßsignalen ermittelt.

17. Verfahren nach einem der Ansprüche 13 oder 16, wobei eines der Meßsignale eine Druckmessung (8) beinhaltet.

18. Verfahren nach Anspruch 10, wobei die Drucksteuerung (1) sich selbst an den Druck, welcher durch den größten Benutzer auf dem hydraulischen Kreis benötigt wird, adaptiert.

19. Verfahren nach Anspruch 18, wobei die Drucksteuerung auf der Basis von einem Umschaltventil (15) und einem Schaltventil (17) stattfindet.

20. Verfahren nach einem der Ansprüche 14 bis 19, wobei ein Schutz gegen Überdruck in der Form eines Drucksteuerungsventils (7) bereitgestellt wird.

21. Verfahren nach Anspruch 20, wobei das Drucksteuerungsventil (7) durch eine Steuerungseinheit (9) eingestellt werden kann.

22. Verfahren nach Anspruch 21, wobei die Steuerungseinheit (9) die Einstellung des Drucksteuerungsventils (7) auf der Basis von Daten in der Form von eingegebenen Informationen des Benutzers oder von Meßsignalen ermittelt.

23. Verfahren nach Anspruch 22, wobei eines der Meßsignale eine Druckmessung (8) aufweist.

24. Verfahren nach einem der Ansprüche 10 bis 23, wobei der Algorithmus der Durchflußmengensteuerung mindestens eine Geschwindigkeitsmessung und eine Druckmessung benutzt.

25. Verfahren nach einem der Ansprüche 10 bis 24, wobei der Algorithmus der Durchflußmengensteuerung mindestens eine Geschwindigkeitsmessung und eine Durchflußmengenmessung benutzt.

26. Verfahren nach einem der Ansprüche 24 oder 25, wobei mindestens eine Höhenmessung benutzt wird.

27. Verfahren nach Anspruch 26, wobei diese Höhenmessung an der Höhe einer Sprühdüse oder Sprühsektion (3) stattfindet.

28. Verfahren nach einem der Ansprüche 24 bis 27, wobei mindestens eine Beschleunigungsmessung benutzt wird.

29. Verfahren nach Anspruch 28, wobei die Beschleunigungsmessung auf der Höhe einer Sprühdüse oder einer Sprühsektion (3) stattfindet.

## Revendications

1. Outil mobile pour la distribution d'une substance fluide sur un substrat, comprenant :
un élément de distribution allongé comportant un ou plusieurs éléments d'éjection de la substance fluide sur toute sa longueur ; dans lequel l'élément de distribution peut être fixé à et supporté par un élément d'entraînement pour déplacer l'outil sur le substrat, et dans lequel l'élément de distribution coopère mécaniquement avec un dispositif de support de sorte que l'élément de distribution et ses éléments d'éjection sont soumis à des déplacements en va-et-vient aléatoires pendant que l'élément d'entraînement déplace l'outil au-dessus du substrat ;
**caractérisé par** :
une première unité de détection pour dériver une vitesse relative et/ou une variation de vitesse relative de chaque élément d'éjection par rapport au substrat, ladite vitesse relative dérivée et/ou variation de vitesse relative comprenant une composante de vitesse déterminée par des déplacements en va-et-vient aléatoires ; et
une unité de commande pour réguler le débit de la substance fluide, à éjecter par chaque élément d'éjection, conformément à la vitesse relative dérivée et/ou variation de vitesse relative de l'élément d'éjection respectif.

2. Outil mobile selon la revendication 1, dans lequel la première unité de détection comprend une deuxième unité de détection pour dériver la vitesse relative de l'élément d'entraînement par rapport au substrat, et une troisième unité de détection pour dériver des valeurs, qui représentent des variations de vitesse de chaque élément d'éjection.

3. Outil mobile selon l'une quelconque des revendications précédentes, comprenant en outre une troisième unité de détection pour dériver la vitesse relative de chaque élément d'éjection par rapport au substrat, dans lequel l'unité de commande régule le débit de la substance fluide, à éjecter à travers chaque élément d'éjection, conformément à la vitesse relative dérivée de l'élément d'éjection respectif.

4. Outil mobile selon l'une quelconque des revendications précédentes, dans lequel l'outil est un outil agricole.

5. Outil mobile selon l'une quelconque des revendications précédentes, dans lequel le substrat est le sol.

6. Dispositif de distribution mobile pour distribuer une substance fluide sur un substrat, comprenant :
un outil mobile selon l'une quelconque des revendications précédentes, et
un élément d'entraînement pour déplacer l'outil mobile par rapport au substrat.

7. Dispositif de distribution mobile ou outil mobile selon l'une des revendications précédentes, dans lequel la substance fluide est un liquide, une substance sous forme de boue ou est constituée de particules solides ou de granules.

8. Procédé pour la distribution d'une substance fluide sur un substrat ; dans lequel un élément de distribution allongé comportant un ou plusieurs éléments d'éjection de la substance fluide sur toute sa longueur, est utilisé, dans lequel l'élément de distribution et ses éléments d'éjection sont soumis à des déplacements en va-et-vient aléatoires ; le procédé comprenant les étapes consistant à
dériver une description du déplacement de chaque élément d'éjection, ledit déplacement incluant une composante déterminée par des déplacements en va-et-vient aléatoires ;
réguler le débit de substance fluide sortant de chaque élément d'éjection, conformément à la description respective.

9. Procédé selon la revendication 8, dans lequel l'élément d'éjection est une buse de pulvérisation ou une section de pulvérisation et dans lequel une distribution aussi homogène que possible d'un liquide de pulvérisation est réalisée en régulant le débit à travers la buse de pulvérisation ou la section de pulvérisation, en fonction du déplacement de cette buse de pulvérisation ou de cette section de pulvérisation.

10. Procédé selon l'une quelconque des revendications 8 ou 9, dans lequel la régulation s'effectue en deux étapes, la première étape comprenant une régulation de pression (1) et la deuxième étape comprenant la régulation du débit réel (2).

11. Procédé selon la revendication 10, dans lequel la régulation de pression est mise en oeuvre sur la base d'un robinet régulateur de pression (7).

12. Procédé selon la revendication 11, dans lequel le robinet régulateur de pression (7) peut être réglé par une unité de commande (9).

13. Procédé selon la revendication 12, dans lequel l'unité de commande (9) détermine le réglage du robinet régulateur de pression (7) sur la base de données sous forme d'informations entrées provenant de l'utilisateur ou de signaux de mesure.

14. Procédé selon la revendication 10, dans lequel la régulation de pression (1) est mise en oeuvre sur la base d'un robinet de débit (13).

15. Procédé selon la revendication 14, dans lequel le robinet de débit (13) peut être mis en marche par une unité de commande (9).

16. Procédé selon la revendication 15, dans lequel l'unité de commande (9) détermine le réglage du robinet de débit (13) sur la base de données sous forme d'informations entrées de l'utilisateur ou de signaux de mesure.

17. Procédé selon l'une quelconque des revendications 13 ou 16, dans lequel un des signaux de mesure comprend une mesure de pression (8).

18. Procédé selon la revendication 10, dans lequel la régulation de pression (1) s'adapte à la pression requise par le plus grand utilisateur sur le circuit hydraulique.

19. Procédé selon la revendication 18, dans lequel la régulation de pression s'effectue sur la base d'un robinet d'inversion (15) et d'un robinet de commutation (17).

20. Procédé selon l'une quelconque des revendications 14 à 19, dans lequel une protection contre toute pression excessive est prévue sous forme d'un robinet régulateur de pression (7).

21. Procédé selon la revendication 20, dans lequel le robinet régulateur de pression (7) peut être réglé par une unité de commande (9).

22. Procédé selon la revendication 21, dans lequel l'unité de commande (9) détermine le réglage du robinet régulateur de pression (7) sur la base de données sous forme d'informations entrées de l'utilisateur ou de signaux de mesure.

23. Procédé selon la revendication 22, dans lequel un des signaux de mesure comprend une mesure de pression (8).

24. Procédé selon l'une quelconque des revendications 10 à 23, dans lequel l'algorithme de la régulation de débit utilise au moins une mesure de vitesse et une mesure de pression.

25. Procédé selon l'une quelconque des revendications 10 à 24, dans lequel l'algorithme de la régulation de débit utilise au moins une mesure de vitesse et une mesure de débit.

26. Procédé selon l'une quelconque des revendications 24 ou 25, dans lequel au moins une mesure de hauteur est utilisée.

27. Procédé selon la revendication 26, dans lequel cette mesure de hauteur s'effectue à la hauteur d'une buse de pulvérisation ou d'une section de pulvérisation (3).

28. Procédé selon l'une quelconque des revendications 24 à 27, dans lequel au moins une mesure d'accélération est utilisée.

29. Procédé selon la revendication 28, dans lequel la mesure d'accélération s'effectue à la hauteur d'une buse de pulvérisation ou d'une section de pulvérisation (3).
